# EUROPÄISCHE PATENTSCHRIFT

(11) **EP 1 243 233 B1**
(45) Veröffentlichungstag und Bekanntmachung des Hinweises auf die Patenterteilung: **29.11.2006**
(21) Anmeldenummer: 02002708.2
(22) Anmeldetag: 06.02.2002
(51) Int. Cl.: A61C 19/10

(54) **Zahnhalteplatte**
Teeth display card
Tablette de support pour dents

(30) Priorität: 23.03.2001 DE 10114210
(43) Veröffentlichungstag der Anmeldung: 25.09.2002
(73) Patentinhaber: Firma Ivoclar Vivadent AG, 9494 Schaan (LI)
(72) Erfinder: Eggler, Andreas, Dr., A - 6922 Wolfurt (AT)
(74) Vertreter: Baronetzky, Klaus

(56) Entgegenhaltungen:
- EP-A- 0 827 720
- WO-A-00/06463
- US-A- 2 874 487
- US-A- 5 782 632
- US-A- 6 079 981

## Beschreibung

Die Erfindung betrifft ein Zahnplättchen, gemäss dem Oberbegriff von Anspruch 1.

Derartige Zahnplättchen sind seit langem bekannt, beispielsweise aus der DE-GM 7 411 122. Bei einer derartigen Lösung werden sechs oder acht Frontzähne oder Seitenzähne in einer Reihe als Zahnsatz dem Zahnarzt oder Zahntechniker zur Verfügung gestellt. Der Zahnarzt verfügt über Schubläden mit Einsätzen in einem Rastermass, die es ermöglichen, dass eine Vielzahl von derartigen Zahnsätzen übereinander und nebeneinander aufgenommen sein können. Hierdurch ist eine schnelle Vorauswahl von Farbe und Form eines bereitzustellenden Ersatzzahns möglich. Die Trägerkörper weisen einen Aufnahmekanal für eine wachsförmige Masse auf, in die die Zähne eingedrückt sind. Durch diese Massnahme lassen sich die Zähne bei Bedarf leicht entnehmen. Zudem steht oberhalb und unterhalb des Aufnahmekanals ausreichend Platz für die Beschriftung zur Verfügung, wobei regelmässig die Zahnfarbe und -form, der Hersteller und weitere Einzelangaben in abgekürzter Form vermerkt sind.

Auch aus der US-A-6,079,981 ist ein derartiges Zahnplättchen bekannt, wobei in einer vorteilhaften Ausgestaltung das Zahnplättchen mit einer Abdeckung versehen werden kann, die den Zahnsatz vor äußeren Einflüssen schützen soll.

Zahnsätze werden in den Zahnplättchen vorgefertigt geliefert. Hierzu sind spezielle Transportbehälter entworfen worden, die die Zahnplättchen nebeneinander und übereinander aufnehmen. Die Schachteln werden dann beim Zahnarzt oder Dentallabor geöffnet und in die Schubladen einsortiert. Dieses Verfahren ist logistisch recht aufwendig, zumal Eingänge und Ausgänge von Zahnplättchen je separat vermerkt werden müssen.

Beim Transport in Transportschachteln geschieht es immer mal wieder, dass sich einzelne Zähne lösen und dann nicht mehr ohne besondere Anstrengung dem zugehörigen Zahnplättchen zugeordnet werden können. Offenbar geschieht dies insbesondere dann, wenn die Zahnplättchen-Serien während des Transports besonders kühl werden. Beim Absinken der Transporttemperatur wird die verformbare Masse, die meist aus Wachs oder einem Wachsderivat besteht, hart, so dass die Haftfähigkeit deutlich geringer ist.

Um die Haftfähigkeit zu verbessern, ist es bekannt geworden, ein Bindewachs zu verwenden, das auch bei recht tiefen Temperaturen eine gute Haftfähigkeit aufweist. Damit lassen sich durchaus auch Transport- und Lagertemperaturen um minus 10°C realisieren, ohne dass Zähne verloren gehen. Jedoch hat das Bindewachs die unangenehme Eigenschaft, dass es bei Raumtemperatur einen ausgesprochen zäh-klebrigen Charakter hat. In der Praxis lassen sich daher Bindewachsreste nicht oder nur schlecht von den Zähne lösen; zudem besteht die Gefahr, dass Bindewachsreste das Restaurationsergebnis beeinträchtigen.

Ein weiteres Problem bekannter Zahnplättchen steht in Zusammenhang mit der Farbvarianz unterschiedlicher Chargen auch ein und desselben Herstellers. Auch bei gleichen Farb- und Helligkeitsbezeichnungen von Zähnen bestehen zwischen den einzelnen Chargen Unterschiede in der Farbgebung und Helligkeit. Um ein möglichst gleichmäßiges Restaurationsergebnis zu erzielen, ist es wünschenswert, lediglich Zähne aus der gleichen Charge zur Erzielung von Farbgleichheit und Helligkeitsgleichheit zu verwenden. Bei den bekannten Zahnplättchen lässt sich aber regelmäßig die Charge im Nachhinein nicht mehr feststellen.

Ferner wäre es wünschenswert, bei etwaigen Garantiefällen oder Schäden der Zähne Einzelheiten hinsichtlich der Lieferung feststellen zu können. Zudem ist es derzeit eher unbefriedigend, dass die Lagerhaltung im einzelnen manuell kontrolliert werden muss. Die Kontrolle ist recht aufwendig, nachdem die hierfür abgestellte Hilfskraft sehr präzise die vorhandenen Zahnplättchen erfassen und dann entsprechend Nachbestellungen veranlassen muss. Bei einem Fehler der manuellen Inventur kommt es leicht zu Lieferengpässen, so dass ggf. ein schlechter passender Zahnsatz eingesetzt werden muss, wenn der an sich geeignete versehentlich nicht nachbestellt wurde. Ausserdem ist die manuelle Bestandskontrolle arbeitsintensiv und daher von der Kostensituation her ungünstig.

Es ist bereits einmal vorgeschlagen worden, die Zahnplättchen auf ihrer Unterseite mit Strichcodes zu versehen, um so eine Erfassung automatisieren zu können. In der WO 00 06463 A wird beispielsweise eine Blistervererpackung, ähnlich einer Tablettenverpackung, beschrieben, auf deren Rückseite mehrere ablösbare Aufkleber angebracht sind, die dann in Lieferscheine und Formulare eingeklebt werden sollen. Jedoch bedingt die Anbringung der Kodierung auf der Unterseite des Zahnplättchens, dass es bei der Bestandsaufnahme entnommen und umgedreht werden muss, um eine Abtastung über einen Strichcodelaser zu ermöglichen.

Daher liegt der Erfindung die Aufgabe zugrunde, ein Zahnplättchen gemäss dem Oberbegriff von Anspruch 1 zu schaffen, das eine optimiert geringe Farbvarianz der zu restaurierenden Zähne ermöglicht, wobei zudem die Lagerhaltung und der Transport verbessert werden soll, ohne die vorhandenen, mit einem Rastermass vorgesehenen Aufbewahrungsorte aufgeben zu müssen.

Diese Aufgabe wird erfindungsgemäß durch Anspruch 1 gelöst. Vorteilhafte Weiterbildungen ergeben sich aus den Unteransprüchen.

Erfindungsgemäß ist es besonders günstig, dass die Haube sowohl die Möglichkeit bietet, die Zähne während des Transports zu schützen, so dass die Gefahr, dass einzelne Zähne verloren gehen und damit der Zahnsatz im Grunde unbrauchbar wird, ausgeschlossen ist, als auch die Zahnsätze zu identifizieren, so dass mindestens das Einsortieren wesentlich vereinfacht wird. Überraschend ergibt sich so die Möglichkeit, der verformbaren wachsartigen Masse eine weniger klebrige Konsistenz zu geben, ohne dass die Gefahr von Verlusten bestände. Wenn die Zähne beim Zahnarzt oder Zahntechniker aufbewahrt sind, sind die Zahnplättchen in der Regel auf Raumtemperatur, so dass die wachsartige Masse ohnehin besser haftet. Zudem sind die Erschütterungen durch das Bewegen der Schubladen wesentlich geringer als die während des Transports möglichen Erschütterungen. Während des Transports besteht auch die Gefahr, dass die Zahnplättchen umgedreht werden. Die erfindungsgemäße durchsichtige Haube verhindert auch in diesem Zustand einen Verlust von Zähnen. Dadurch, dass die Masse weniger klebrig eingestellt ist, ist die Gefahr geringer, dass Reste an dem Zahn bei Entnahme haften bleiben und zu Verunreinigungen führen.

Erfindungsgemäß ist es ferner besonders günstig, dass die Zahnplättchen stapelbar sind und damit automatisch transportiert und gelagert werden können.

Erfindungsgemäß besonders günstig ist es, dass das vorgegebene Rastermaß mit der erfindungsgemäßen Haube eingehalten bleibt. Hierzu ist es vorgesehen, dass die Abmessungen des Trägerkörpers mindestens in dem Bereich, in dem sich die Wände der Haube erstrecken, kleiner ausgebildet sind, und zwar um die Wandstärke der Haube. In einer ersten Ausführungsform steht die Haube unten an dem Trägerkörper auf einem Absatz auf, so dass dort auch eine gewisse Dichtwirkung entsteht. Diese Lösung ist besonders günstig, wenn es gilt, zugleich auch einen Schutz der Zähne gegen Verschmutzungen bereitzustellen.

Zwar sind die Schubladen eines Zahnsatzschrankes in der Regel so ausgebildet, dass sie eine gewisse Abdichtung gegen Staub und Ablagerungen bieten. Dennoch muss bei den bislang bekannten Zahnplättchen von Zeit zu Zeit eine Reinigung der Zähne vorgenommen werden, die recht mühsam vorzunehmen ist, zumal ein reines Absaugen etwa mit einem Staubsauger zum Verlust von Zähnen führen könnte. Mit der erfindungsgemäßen Haube lässt sich demgegenüber die Verschmutzung auch bei langjähriger Lagerung der Zähne drastisch reduzieren. In diesem Zusammenhang ist es bevorzugt, wenn die Haube den Trägerkörper allseitig abschließt.

In einer modifizierten Ausgestaltung des erfindungsgemäßen Zahnplättchens erstreckt sich jede Wand des Trägerkörpers, auf der eine Wand der Haube geführt ist, gerade nach unten. Diese Lösung erlaubt dann auch ein Umstecken der Haube dergestalt, dass die Haube unten über den Trägerkörper gestülpt ist.

Die erfindungsgemäße Kodierung lässt sich in jedem Falle durch die seitliche Anbringung insbesondere auf einer Seitenwand der Haube ohne weiteres erkennen und auch über einen Scanner erfassen. Mit dieser Lösung lässt sich die Lagerhaltung von Zähnen in einem Zahnlabor, in einem Zahndepot und bei einem Zahnarzt automatisieren. Hierzu besteht beispielsweise die Möglichkeit, beim Eingang neuer Zahnplättchen die Zahnplättchen kurz über den Scanner zu führen, um den Zugang rechnergestützt zu erfassen. Über ein dementsprechendes Lagerhaltungsprogramm lässt sich dann jederzeit der Status erfassen. Wenn Zähne verbraucht sind, wird das entsprechende Zahnplättchen samt Haube über einen anderen Scanner geführt, oder der vorstehend erwähnte Scanner wird in den Zustand versetzt, in dem er einen Abgang der Zähne erfasst. Auf diese Weise lässt sich der Status der Lagerhaltung genau maschinengestützt erfassen, und es ist auch möglich, eine automatische Nachbestellung auszulösen, wenn der Vorrat eine frei einzustellende Mindestmenge unterschritten hat.

Die erfindungsgemäße Kodierung erlaubt auch eine Chargen-Identifizierung und auch eine Rückverfolgbarkeit der zahnherstellung.

Die erfindungsgemäße Lösung erlaubt durch die Realisierung mindestens eines durchsichtigen Bereichs eine freie Sicht auf die Zähne. Die erfindungsgemäße Haube kann beispielsweise aus Polyacryl oder einem beliebigen anderen geeigneten Material ausgebildet sein. Wenn ein besonders klarer Kunststoff ohne Farbverfälschungen verwendet wird, ist es auch möglich, eine Farbbeurteilung vorzunehmen, ohne dass die Gefahr besteht, dass durch die Haube Farbverfälschungen entstehen.

In einer vorteilhaften Ausgestaltung des erfindungsgemäßen Zahnplättchens ist es vorgesehen, dass der Trägerkörper seitlich zwei Griffbereiche aufweist, die mit einer Riffelung, einer Griffmulde oder dergleichen versehen sind. Dort springen die Seitenwände der Haube bevorzugt zurück, so dass das Öffnen des erfindungsgemäßen Zahnplättchens zuverlässig und rasch möglich ist, aber dennoch ein fester Sitz gewährleistet ist, der zur Abdichtung beiträgt und auch den Verlust der Zähne während des Transports verhindert.

Die erfindungsgemäße Kodierung kann an einer Seitenwand oder Stirnwand der Haube angebracht sein. Dort besteht ausreichend ungenutzter Platz, so dass beispielsweise ein recht großer Strichcode aufgebracht sein kann. In einer modifizierten Ausgestaltung des erfindungsgemäßen Zahnplättchens ist es vorgesehen, die Kodierung auf der Deckfläche der Haube am Rand anzubringen. Hierdurch ist die freie Sicht auf die Beschriftungen des Trägerkörpers und auf die Zähne selbst nicht beeinträchtigt. Dennoch lässt sich bei Bedarf, beispielsweise auch zu Inventurzwecken, die Kodierung mit einem Handscanner auch dann erfassen, wenn das Zahnplättchen in der Schublade des Zahnsatzschrankes ist, nachdem in dieser Position regelmäßig die Seitenwände durch die Aneinanderreihung von benachbarten Zahnplättchen abgedeckt sind.

Erfindungsgemäß besonders günstig ist es, dass die Zahnplättchen mit der erfindungsgemäßen Haube auch stapelbar und somit einer automotisierten Handhabung zugänglich sind.

Bei Anbringung der Kodierung an der Seitenwand lässt sich die Produkterfassung auch in gestapeltem Zustand vornehmen. Es versteht sich, dass bei Bedarf die Kodierung sowohl an der Vorderseite als auch an der Oberseite vorgesehen sein kann.

In einer weiteren vorteilhaften Ausgestaltung ist eine Originalitätssicherung vorgesehen. Hierzu kann beispielsweise eine Banderole um Haube und Trägerkörper geklebt sein, deren Unversehrtheit garantiert, dass das erfindungsgemäße Zahnplättchen noch nicht geöffnet wurde.

In einer weiteren vorteilhaften Ausgestaltung wird als Originalitätssicherung eine Banderole mit Kodierung verwendet, so dass mit einem Etikett die Sicherung von Trägerkörper und Haube und zugleich die Kodierung verwirklicht wird.

Weitere Vorteile, Einzelheiten und Merkmale ergeben sich aus der nachfolgenden Beschreibung zweier Ausführungsbeispiele anhand der Zeichnung.

Es zeigen:
- Fig. 1: eine Draufsicht auf eine Ausführungsform eines erfindungsgemäßen Zahnplättchens, wobei die Haube weggelassen ist und der Trägerkörper dargestellt ist;
- Fig. 2: eine Seitenansicht des erfindungsgemäßen Zahnplättchens von der Breitseite aus betrachtet;
- Fig. 3: eine Ansicht eines erfindungsgemäßen Zahnplättchens in der Ausführungsform gemäß Fig. 1 und 2, von der Längsseite aus betrachtet;
- Fig. 4: eine Ansicht einer weiteren Ausführungsform des erfindungsgemäßen Zahnplättchens, unter Darstellung einer Kodierung auf der Haube;
- Fig. 5: eine Draufsicht auf eine weitere Ausführungsform eines erfindungsgemäßen Zahnplättchens, wobei die Haube weggelassen ist;
- Fig. 6: eine Draufsicht auf die Haube für die Ausführungsform gemäß Fig. 5; und
- Fig. 7: eine Seitenansicht einer weiteren Ausführungsform eines erfindungsgemäßen Zahnplättchens.

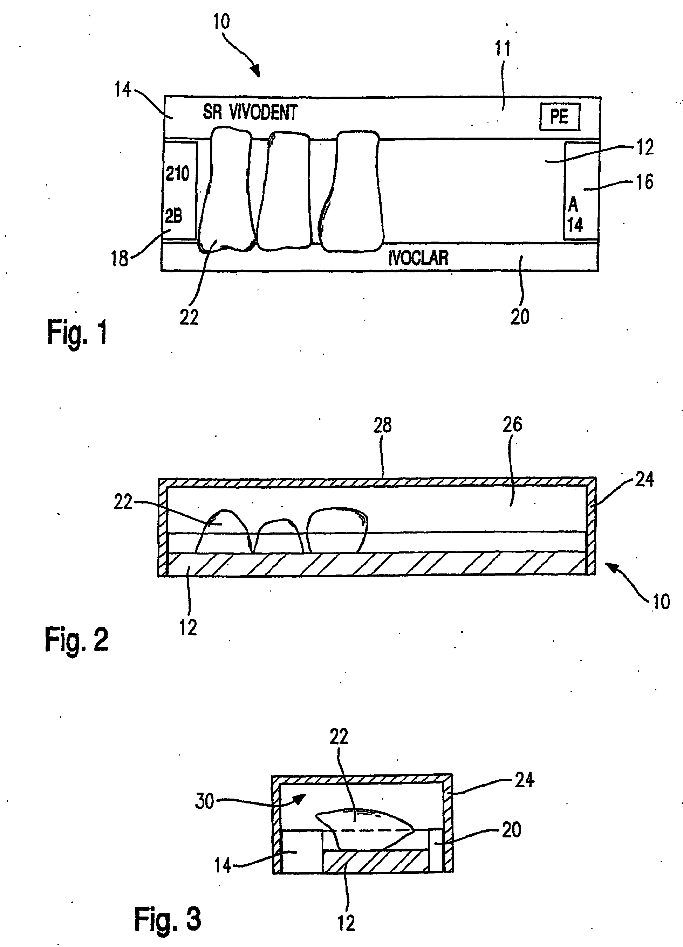

Aus Fig. 1 ist eine Ausführungsform eines erfindungsgemäßen Zahnplättchens 10 ersichtlich. Das Zahnplättchen 10 weist einen Trägerkörper 11 auf, der in an sich bekannter Weise kanalförmig ausgebildet ist. Der Trägerkörper 11 weist eine Ausnehmung auf, die eine wachsartige, insbesondere plastisch verformbare Masse 12 aufnimmt. Oberhalb und unterhalb der Masse 12 erstrecken sich Vorderflächen 14 und 20 des Trägerkörpers 11, die in geeigneter Weise beschriftet sind, beispielsweise mit dem Herstellernamen, der Zahnsorte und dem Dentalmaterial.

Seitlich ist der Innenraum des Trägerkörpers 11 von Einlagen 16 und 18 begrenzt, die weitere Hinweise hinsichtlich der Zahnform und -farbe geben.

In dem dargestellten Ausführungsbeispiel ist die Masse 12 als Strang vorgesehen, der quer über den Trägerkörper 11 läuft. Es versteht sich, dass bei einer modifizierten Ausgestaltung auch eine wannenförmige Aufnahme für die Masse 12 vorgesehen sein kann.

In die Masse 12 sind sechs oder acht Zähne 22 eingedrückt. Die Zähne überlappen teilweise die Vorderflächen 14 und 20, jedoch so, dass die Beschriftung ohne weiteres sichtbar ist.

Aus Fig. 2 ist im einzelnen ersichtlich, in welcher Weise eine erfindungsgemäße Haube 24 auf dem Trägerkörper 11 aufgebracht sein kann. Die erfindungsgemäße Haube 24 besteht aus durchsichtigem Material und deckt den Trägerkörper von fünf Seiten ab. Sie bildet einen Hohlraum 26 aus, in dem sich die Zähne 22 erstrecken. Die Höhe des Hohlraums 26 ist so ausgelegt, dass auch die größten aufzunehmenden Zähne 22 Platz haben. Durch die Haube 24 erhält das erfindungsgemäße Zahnplättchen 10 eine quaderförmige Außenform.

In dem dargestellten Ausführungsbeispiel ist das Rastermaß gewahrt, so dass bereits vorhandene Zahnschränke ohne weiteres mit dem erfindungsgemäßen Zahnplättchen bestückbar sind. Hierzu sind die Abmessungen des Trägerkörpers 11 an den vier Seiten je um die Wandstärke der Haube 24 reduziert.

Aus Fig. 3 ist ersichtlich, in welcher Weise sich die Zähne 22 in der Masse 12 erstrecken. Durch ein vorspringendes überlappen gegenüber der Vorderfläche 14 ergibt sich eine recht leichte Entnahme, wenn die Haube 24 abgenommen ist.

Die Haube 24 kann in einer modifizierten Ausgestaltung, die in Fig. 3 angedeutet ist, auch an den Stirnseiten 30 und 30a offen sein, so dass sich die Haube 24 lediglich über drei Seiten des Trägerkörpers 11 erstreckt.

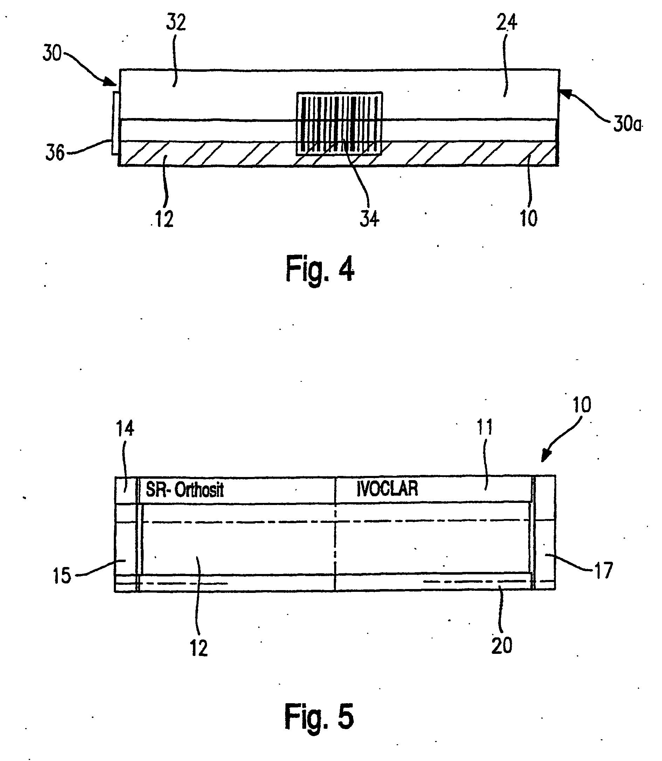

Aus Fig. 4 ist ersichtlich, in welcher Weise die Kodierung angebracht sein kann. Bei 34 und bei 36 ist je eine Kodierung angedeutet, wobei es sich versteht, dass diese beiden Kodierungen alternativ vorgesehen sind. Jedenfalls bietet die Seitenwand 32 der Haube ausreichend Platz für die Aufnahme beispielsweise eines Strichcodes.

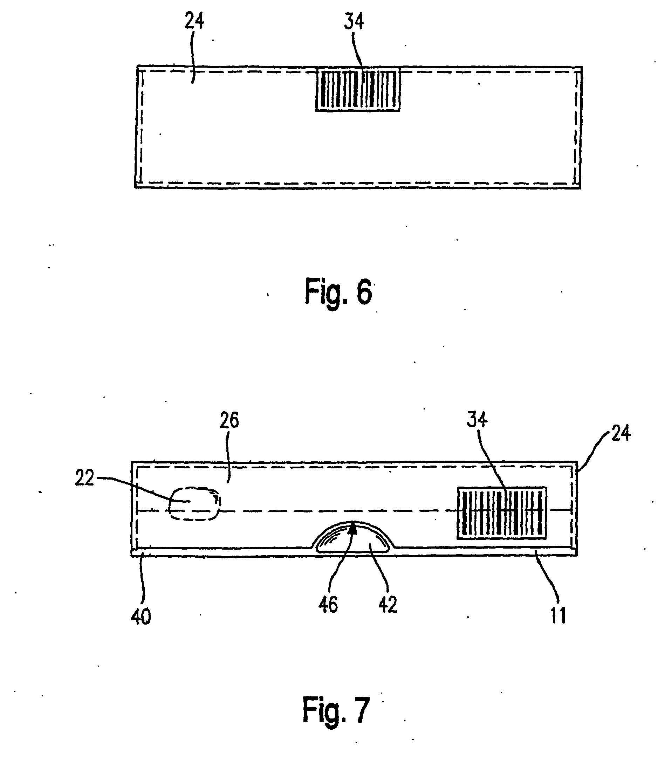

Es ist auch möglich, die erfindungsgemäße Kodierung als Etikett auf der Oberseite 28 der Haube 24 vorzusehen. Hierzu ist beispielsweise die aus Fig. 5 ersichtliche Ausführungsform eines Trägerkörpers 11 ersichtlich. Bei dieser Lösung ist die Masse 12 in einer Wanne vorgesehen, nachdem anstelle der Einlagen 16 und 18 Seitenwände 15 und 17 vorgesehen sind. Die Beschriftung lässt bei dieser Lösung in der Mitte der oberen Vorderfläche 14 ausreichend unbeschrifteten Platz. Dies erlaubt die Anbringung einer Kodierung 34 gemäß Fig. 6 an einer Stelle, die diesen Platz überlappt. Auch wenn die Kodierung 34 undurchsichtig ist, wird hierdurch nicht der Blick auf die Zähne oder die sonstigen Informationen der Vorderflächen 14 und 20 beeinträchtigt.

Es versteht sich, dass die Anbringung der Kodierung 34 in das Belieben des Anwenders gestellt ist und bei Bedarf auch mehrere Kodierungen vorgesehen sein können.

Aus Fig. 7 ist eine modifizierte Ausgestaltung eines erfindungsgemäßen Zahnplättchens ersichtlich. Bei dieser Lösung weist der Trägerkörper 11 unten ringsum umlaufend einen Vorsprung 40 auf. Die Haube 24 erstreckt sich bei dieser Ausgestaltung bis zu dem Vorsprung 40, aber nicht über den Trägerkörper 11 hinaus. Diese Lösung erlaubt eine ausgesprochen gute Abdichtung des Innenraums 26 zur staubsicheren Aufnahme der Zähne 22. Die Lösung zeichnet sich zudem durch eine Griffmulde 42 aus, die an einer Seitenfläche des Trägerkörpers 11 ausgebildet ist und mit einer entsprechenden Aussparung 46 in der Haube korrespondiert. Die Griffmulde 42 dient dazu, Haube und Zahnplättchen leichter voneinander trennen zu können.

## Patentansprüche

1. Zahnplättchen, mit einem Trägerkörper, der mit einem Aufnahmekanal für eine verformbare Masse (12) ausgerüstet ist, in welche Zähne eindrückbar sind, wobei der Trägerkörper einen rechteckigen Grundaufbau mit einem vorgegebenen Rastermass für das Aneinanderreihen der Zahnplättchen aufweist und wobei die Zähne in einer Reihe nebeneinander angeordnet sind, und mit eine Haube (24), die die Zähne (22) und den Trägerkörper (11) mindestens teilweise abdeckt, **dadurch gekennzeichnet, dass** die Haube (24) durchsichtig ist, dass ihre Wände innerhalb des vorgegebenen Rastermaßes enden, und dass die Haube eine Kodierung (34) trägt.

2. Zahnplättchen nach Anspruch 1, **dadurch gekennzeichnet, dass** die Kodierung (34) auf mindestens einer Stirnwand oder Seitenwand (15, 17) der Haube (24) angebracht ist.

3. Zahnplättchen nach einem der vorhergehenden Ansprüche, **dadurch gekennzeichnet, dass** der obere Teil von Seitenwänden (16, 18) des Trägerkörpers (11) zurückspringt und das Rücksprungmass im wesentlichen der Wandstärke der Haube (24) entspricht.

4. Zahnplättchen nach einem der vorhergehenden Ansprüche, **dadurch gekennzeichnet, dass** die Haube (24) mit dem Trägerkörper (11) über eine Originalitätssicherung verbunden ist.

5. Zahnplättchen nach Anspruch 4, **dadurch gekennzeichnet, dass** die Originalitätssicherung als Etikett oder als Banderole ausgebildet ist, die den Trägerkörper (11) und die Haube (24) mindestens teilweise umgibt.

6. Zahnplättchen nach einem der vorhergehenden Ansprüche, **dadurch gekennzeichnet, dass** die Kodierung (34) als Aufdruck oder als dünnes Etikett auf der Haube (24) aufgebracht ist.

7. Zahnplättchen nach einem der vorhergehenden Ansprüche, **dadurch gekennzeichnet, dass** die Kodierung (34) als ein- oder als zweidimensionale Strichcode-Kodierung (34) ausgebildet ist.

8. Zahnplättchen nach einem der vorhergehenden Ansprüche, **dadurch gekennzeichnet, dass** die Haube (24) zwei Seitenwände (32) aufweist, die die Längsseiten des Trägerkörpers (11) im wesentlichen abdecken.

9. Zahnplättchen nach einem der vorhergehenden Ansprüche, **dadurch gekennzeichnet, dass** die Seitenwände (32) eine Aussparung (46) aufweisen, die den Platz über einer Griffmulde (42) freilässt, die in dem Trägerkörper (11) ausgebildet ist.

10. Zahnplättchen nach einem der vorhergehenden Ansprüche, **dadurch gekennzeichnet, dass** die Haube (24) einen Innenraum (26) oberhalb der Masse (12) ausbildet, der sich etwas weiter nach oben erstreckt als der grösste verwendete in die Masse (12) eingedrückte Zahn und insbesondere weniger als die doppelte Höhe der Zähne (22) beträgt.

11. Zahnplättchen nach einem der vorhergehenden Ansprüche, **dadurch gekennzeichnet, dass** die Haube (24) eine Fläche aufweist, die sich oberhalb der Zähne (22) und oberhalb von Beschriftungsfeldern des Trägerkörpers (11) erstreckt.

12. Zahnplättchen nach einem der vorhergehenden Ansprüche, **dadurch gekennzeichnet, dass** die Kodierung (34) die Art, Grösse, Farbe, das Material und/oder den Hersteller der aus den in den Trägerkörper (11) aufgenommenen Zähne (22) gebildeten Zahnsatz kennzeichnet.

13. Zahnplättchen nach einem der vorhergehenden Ansprüche, **dadurch gekennzeichnet, dass** die Kodierung (34) auf einer Originalitätssicherung angebracht ist, die sich über die Trennstelle zwischen Haube (24) und Trägerkörper (11) erstreckt.

14. Zahnplättchen nach einem der vorhergehenden Ansprüche, **dadurch gekennzeichnet, dass** die Masse Wachs, Klebstoff und/oder Weichkunststoff aufweist.

## Claims

1. A dental plate, having a carrier body which is provided with a receiving channel for a deformable compound (12), into which teeth can be impressed, wherein the carrier body is of rectangular basic configuration with a predetermined reference grid for lining up the dental plates, and wherein the teeth are arranged side by side in a row, and with a hood (24) which at least partly covers the teeth (22) and the carrier body (11), **characterised in that** the hood (24) is transparent, **in that** its walls terminate inside the predetermined reference grid and **in that** the hood bears a code (34).

2. A dental plate according to Claim 1, **characterised in that** the code (34) is applied to at least one end wall or side wall (15,17) of the hood (24).

3. A dental plate according to one of the preceding Claims, **characterised in that** the upper part rebounds from side walls (16,18) of the carrier body (11) and the degree of rebound corresponds substantially to the wall thickness of the hood (24) .

4. A dental plate according to any one of the preceding Claims, **characterised in that** the hood (24) is connected to the carrier body (11) via an authenticity safeguard.

5. A dental plate according to Claim 4, **characterised in that** the authenticity safeguard is in the form of a label or seal which at least partly surrounds the carrier body (11) and the hood (24).

6. A dental plate according to any one of the preceding claims, **characterised in that** the code (34) is applied to the hood (24) as an imprint or as a thin label.

7. A dental plate according to any one of the preceding Claims, **characterised in that** the code (34) is in the form of a one or two-dimensional bar code (34).

8. A dental plate according to any one of the preceding Claims, **characterised in that** the hood (24) has two side walls (32) which substantially cover the longitudinal sides of the carrier body (11).

9. A dental plate according to any one of the preceding Claims, **characterised in that** the side walls (32) have a recess (46) which leaves free the space over a grip depression (42) which is formed in the carrier body (11).

10. A dental plate according to any one of the preceding Claims, **characterised in that** the hood (24) forms an inner space (26) above the compound (12), which extends slightly further upwards than the largest tooth used impressed into the compound (12) and, in particular, amounts to less than double the height of the teeth (22).

11. A dental plate according to any one of the preceding Claims, **characterised in that** the hood (24) has a surface which extends above the teeth (22) and above the inscription panels of the carrier body (11).

12. A dental plate according to any one of the preceding Claims, **characterised in that** the code (34) characterises the nature, size, colour, the material and/or the manufacturer of the set of teeth formed from the teeth (22) accommodated in the carrier body (11).

13. A dental plate according to any one of the preceding Claims, **characterised in that** the code (34) is applied to an authenticity safeguard which extends over the separating line between the hood (24) and the carrier body (11).

14. A dental plate according to any one of the preceding Claims, **characterised in that** the compound comprises wax, adhesive and/or soft plastics material.

## Revendications

1. Tablette pour dents, comprenant un corps support, qui est équipé d'un canal de logement pour une masse (12) déformable, dans laquelle des dents peuvent être enfoncées, le corps support présentant une structure de base rectangulaire avec une cote de trame prédéfinie pour l'alignement des tablettes pour dents et les dents étant disposées dans une rangée les unes à côté des autres, et avec un capot (24), qui recouvre au moins partiellement les dents (22) et le corps support (11), **caractérisée en ce que** le capot (24) est transparent, **en ce que** ses parois se terminent à l'intérieur de la cote de trame prédéfinie et **en ce que** le capot porte un codage (34).

2. Tablette pour dents selon la revendication 1, **caractérisée en ce que** le codage (34) est placé sur au moins une paroi avant ou une paroi latérale (15, 17) du capot (24).

3. Tablette pour dents selon l'une quelconque des revendications précédentes, **caractérisée en ce que** la partie supérieure des parois latérales (16, 18) du corps support (11) est en retrait et la cote de retrait correspond sensiblement à l'épaisseur de paroi du capot (24).

4. Tablette pour dents selon l'une quelconque des revendications précédentes, **caractérisée en ce que** le capot (24) est relié au corps support (11) au moyen d'une sécurité d'origine.

5. Tablette pour dents selon la revendication 4, **caractérisée en ce que** la sécurité d'origine est réalisée sous la forme d'étiquette ou de banderole qui entoure au moins partiellement le corps support (11) et le capot (24).

6. Tablette pour dents selon l'une quelconque des revendications précédentes, **caractérisée en ce que** le codage (34) est appliqué sous forme de surimpression ou de ticket mince sur le capot (24).

7. Tablette pour dents selon l'une quelconque des revendications précédentes, **caractérisée en ce que** le codage (34) est conçu comme un codage à code barres (34) en une dimension ou en deux dimensions.

8. Tablette pour dents selon l'une quelconque des revendications précédentes, **caractérisée en ce que** le capot (24) présente deux parois latérales (32) qui recouvrent largement les grands côtés du corps support (11).

9. Tablette pour dents selon l'une quelconque des revendications précédentes, **caractérisée en ce que** les parois latérales (32) présentent un évidement (46) qui laisse libre la place au-dessus d'une poignée encastrée (42), laquelle est réalisée dans le corps support (11).

10. Tablette pour dents selon l'une quelconque des revendications précédentes, **caractérisée en ce que** le capot (24) forme un espace intérieur (26) au-dessus de la masse (12) qui s'étend un peu plus davantage vers le haut que la dent la plus grande utilisée et enfoncée dans la masse (12) et en particulier représente au moins du double de la hauteur des dents (22).

11. Tablette pour dents selon l'une quelconque des revendications précédentes, **caractérisée en ce que** le capot (24) présente une surface qui s'étend au-dessus des dents (22) et au-dessus de zones de marquage du corps support (11).

12. Tablette pour dents selon l'une quelconque des revendications précédentes, **caractérisée en ce que** le codage (34) identifie la nature, la grandeur, la couleur, le matériau et/ou le constructeur des ensembles de dents formés à partir des dents (22) réceptionnées dans le corps support (11).

13. Tablette pour dents selon l'une quelconque des revendications précédentes, **caractérisée en ce que** le codage (34) est placé sur une sécurité d'origine, qui s'étend sur le point de séparation entre le capot (24) et le corps support (11).

14. Tablette pour dents selon l'une quelconque des revendications précédentes, **caractérisée en ce que** la masse présente de la cire, de la colle et/ou du plastique mou.
